# EUROPEAN PATENT APPLICATION

(11) **EP 4 600 324 A1**
(43) Date of publication of application: **13.08.2025**
(21) Application number: 25151699.3
(22) Date of filing: 14.01.2025
(51) Int. Cl.: C09K 5/06, F28D 20/02

(54) **COMPOSITE BINDER, PREPARATION METHOD THEREOF AND ELECTROCHEMICAL DEVICE**

(30) Priority: 07.02.2024 CN 202410178989
(71) Applicant: AESC Japan Ltd., Kanagawa, 2520012 (JP)
(72) Inventor: ZHAO, Yuhai, Pudong New Area Shanghai 201315 (CN); SUN, Huayu, Pudong New Area Shanghai 201315 (CN)
(74) Representative: Becker, Eberhard

(57) **Abstract**

A composite binder, a preparation method thereof, and an electrochemical device are provided. The composite binder has a core-shell structure, wherein, a core of the core-shell structure is a phase change material, and a phase change temperature of the phase change material is -10°C to 70°C. A shell of the core-shell structure is a polymer binder. The preparation method includes the following steps: subjecting a mixture of an oil phase and a water phase to shearing treatment and polymerization reaction for production. The oil phase includes the phase change material and a raw material of the polymer binder, and the raw material of the polymer binder at least includes a monomer. The water phase includes water and an emulsifier.

## Description

### BACKGROUND

### Technical Field

The disclosure relates to a composite binder, a preparation method thereof, and an electrochemical device.

### Description of Related Art

Lithium/sodium-ion batteries are important electrochemical energy storage devices and have been widely used in consumer electronics, new energy vehicles, power storage devices, and other fields. Lithium ions reversibly embedded in/escape from the active material through the electrolyte-active material interface, and the battery charging and discharging process is thus completed. However, good battery performance has strict requirements on the temperature (thermal) environment of the cells. High-temperature environments will aggravate electrolyte side reactions and ultimately deteriorate long-term cycle performance. Low-temperature environments will reduce the lithium ion migration rate and interface transfer reaction activation energy, increase internal resistance, and aggravate the lithium precipitation phenomenon. Further, even at room temperature, high-rate charging and discharging or long-term charging and discharging will still cause strong thermal shock, making the temperature soar and thermal runaway prone to occur.

However, at present, the thermal management of batteries is limited to the module/pack level, and liquid cooling is used for cooling down most of the time. There is no method that can be used to adjust heat on demand in real time from inside the sheet to provide a uniform and constant thermal environment for battery operation.

### SUMMARY

In order to fill the gap in the field of electrode sheet level thermal management and cell level thermal management in existing batteries, the disclosure provides a composite binder, a preparation method thereof, and an electrochemical device. By applying the composite binder to a currently-available electrode sheet preparation process, the electrode sheet thermal environment can be controlled according to needs, and properties such as cell high and low temperatures, fast charging, and safety are improved.

In the first aspect, the disclosure provides a composite binder having a core-shell structure.

A core of the core-shell structure includes a phase change material, and a phase change temperature of the phase change material is -10°C to 70°C.

A shell of the core-shell structure includes a polymer binder.

In the second aspect, the disclosure further provides a preparation method of the composite binder, and the preparation method of the composite binder includes the following step.

A mixture of an oil phase and a water phase is subjected to shearing treatment and polymerization reaction to produce the composite binder.

The oil phase includes the phase change material and a raw material of the polymer binder, and the raw material of the polymer binder at least includes a monomer.

The water phase includes water and an emulsifier.

In the third aspect, the disclosure further provides an electrochemical device, and the composite binder according to the above is used in a preparation process of an electrode sheet of the electrochemical device.

The positive progress effects provided by the disclosure include the following.

The disclosure provides a composite binder having a core-shell structure with a phase change material as a core and a polymer binder as a shell. The phase change material has a specific phase change temperature. The composite binder can maintain its inherent bonding performance and undergo phase changes according to changes in external environmental temperature (battery temperature), thereby releasing or absorbing heat. Temperature, thermal shock mitigation and other issues can thus be directly and efficiently controlled from the electrode sheet level. In this way, battery performance such as fast charging, high and low temperatures, cycle, and safety can be improved. It is adapted to the existing electrode sheet manufacturing process and does not require modification or upgrade of equipment.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a scanning electron microscope (SEM) image of a composite binder in Example 1.
FIG. 2 is a transmission electron microscopy (TEM) image of the composite binder in Example 1.

### DESCRIPTION OF THE EMBODIMENTS

The disclosure will be further described in the following paragraphs through examples, but the disclosure is not limited to the scope of the examples. For the experimental methods that do not specify specific conditions in the following examples, selection is made according to conventional methods and conditions or according to the product instructions.

### Composite Binder

In the first aspect of the disclosure, a composite binder is provided, and the composite binder has a core-shell structure.

A core of the core-shell structure is a phase change material, and a phase change temperature of the phase change material is -10°C to 70°C.

A shell of the core-shell structure is a polymer binder.

In the disclosure, the core-shell structure may be an ordered assembly structure formed by covering a core-layer material with a shell-layer material.

In the disclosure, the meaning of the phase change material is a substance that can undergo a first-order phase transition and release latent heat, that is, a substance that can change its shape with temperature changes and can provide latent heat. The process in which a phase change material changes from solid to liquid (melting) or from liquid to solid (solidification) is called a phase change process. At this time, the phase change material absorbs or releases a large amount of latent heat. Correspondingly, the temperature at which the phase change process of the phase change material occurs is the phase change temperature.

In the disclosure, the phase change temperature of the phase change material is -10°C to 70°C. According to actual application needs, a person having ordinary skill in the art can select a composite binder containing a phase change material in a corresponding temperature range and may also choose to mix and use composite binders containing phase change materials in different temperature ranges. For instance, if a phase change material with a phase change temperature of -10°C to 25°C is selected, when the battery enters a cold environment from a normal temperature environment, the phase change material can change from liquid to solid, so latent heat is released and the battery is preheated. For another instance, if a phase change material with a phase change temperature of 50°C to 70°C is selected, when the battery enters a high-temperature environment from a normal temperature environment, the phase change material can change from solid to liquid, so latent heat is absorbed, the battery temperature is lowered, and safety problems caused by excessively-high battery temperature are thus prevented from occurring.

In some embodiments, the phase change temperature of the phase change material is 25°C to 50°C, such as 25°C to 30°C, 35°C to 40°C, or 45°C to 50°C. This temperature range is the most conducive to long-term charging and discharging of the battery under normal temperature conditions. The battery heats up during charging and discharging. For instance, in a 25°C environment (it is generally considered that 25°C is the optimal operating temperature of the battery), such as LFP (lithium iron phosphate) and NCM (nickel cobalt manganese peroxide ternary material) chemical system batteries, during the 1C rate charging process, the battery temperature generally increases by 10°C to 25°C. During this process, the phase change material can effectively absorb part of the heat to improve battery performance.

In the disclosure, the phase change material may be selected from C₁₀-C₂₄ long-chain alkanes and a mixture thereof.

In some embodiments, the phase change material is paraffin wax, and the phase change temperature of the paraffin wax is optionally 5°C to 10°C, 20°C to 25°C, 25°C to 30°C, 35°C to 40°C, or 45°C to 50°C. The paraffin wax may refer to a mixture of alkanes with different numbers of carbon atoms, where the alkanes with different numbers of carbon atoms have different melting points. That is, a person having ordinary skill in the art can select different alkanes according to actual needs to obtain paraffin waxes with different melting points.

In the disclosure, a particle size of the composite binder may be 0.1 µm to 10 µm, for example, 0.4 µm.

In the disclosure, in the core-shell structure, a mass ratio of the core to the shell may be (1:10) to (4:1), preferably (1:1) to (4:1), such as 1.5:1 or 2:1.

In the disclosure, a thickness of the shell of the core-shell structure may be 0.01 µm to 1 µm, such as 20 nm, 30 nm, 40 nm, or 60 nm.

In the disclosure, the polymer binder may be a cross-linked polymer or a non-cross-linked polymer. When the polymer binder is a non-cross-linked polymer, its weight average molecular weight is optionally 70,000 g/mol to 500,000 g/mol.

### Preparation Method of Composite Binder

In the second aspect of the disclosure, a preparation method of the composite binder is provided, and the preparation method of the composite binder includes the following step.

A mixture of an oil phase and a water phase is subjected to shearing treatment and polymerization reaction to produce the composite binder.

The oil phase includes the phase change material and a raw material of the polymer binder, and the raw material of the polymer binder at least includes a monomer.

The water phase includes water and an emulsifier.

In the disclosure, the monomer may be a monoene monomer or a non-polyene monomer, and a person having ordinary skill in the art will know its specific meaning.

In the disclosure, a mass of the oil phase is based on a total mass of the phase change material and the monomer, and a mass of the water phase is based on a total mass of water. A mass ratio of the oil phase to the water phase may be 1:(1-10), preferably 1:(1-7), for example, 1:1.3, 1:1.7, 1:2.0, 1:3.3, 1:4.0, or 1:6.7.

In the disclosure, the step of the shearing treatment may be performed using strong shear liquid-liquid dispersion equipment. Optionally, the strong shear liquid-liquid dispersion equipment includes one of a high-speed shearer, a high-pressure homogenizer, a cell grinder, and a hypergravity field generating device, such as a high-speed shearer or an ultrasonic cell grinder.

In some embodiments, a shearing speed of the high-speed shearer is 2000 rpm to 5000 rpm.

In some embodiments, power of the ultrasonic cell grinder is 150W to 600W, optionally 200W to 500W, such as 400W.

In the disclosure, a time of the shearing treatment is 5 minutes to 15minutes.

In the disclosure, a temperature of the shearing treatment may be ambient temperature.

In the disclosure, a temperature of the polymerization reaction is 50°C to 85°C, such as 75°C.

In the disclosure, a time of the polymerization reaction is 6 hours to 12 hours, such as 10 hours.

In the disclosure, the polymerization reaction may be carried out under stirring.

In the disclosure, an inert gas such as nitrogen may be continuously introduced into a process of the polymerization reaction.

In the disclosure, the step of the polymerization reaction may also include a step of drying.

In the disclosure, the monomer may be one or more selected from the group consisting of butyl acrylate, hydroxyethyl acrylate, methacrylate, acrylic acid, methacrylic acid, acrylonitrile, methacrylonitrile, styrene, vinyl toluene, tert-butylstyrene, and N-hydroxymethylacrylamide.

In some embodiments, the monomer is styrene, hydroxyethyl acrylate, and butyl acrylate. A mass ratio of the styrene to the hydroxyethyl acrylate to the butyl acrylate is optionally 50:40:10.

In the disclosure, the emulsifier may be a polymer emulsifier, and the polymer means a molecular weight of 1,000 g/mol to 50,000 g/mol.

The polymer emulsifier used in the disclosure (emulsifier used in a polymer polymerization process) has the emulsifying properties of the emulsifier itself and is soft in texture, so that bonding strength of the shell-layer polymer binder may be further improved. Optionally, the emulsifier is one or more selected from the group consisting of sodium lauryl sulfate, cetyltrimethylammonium bromide, nonylphenol polyoxyethylene ether, an OP surfactant, a Span surfactant, a Tween surfactant, and sodium dodecyl benzene sulfonate.

In some embodiments, the emulsifier is sodium lauryl sulfate.

In the disclosure, the raw material of the polymer binder may further include an initiator. The initiator may be an azo initiator and/or a peroxide initiator whose water solubility is less than or equal to 0.5 g/kg of water at 25°C. The azo initiator optionally includes azobisisobutyronitrile and/or azobisisoheptanitrile. The peroxide initiator optionally includes one or more of benzoyl peroxide, ammonium persulfate, and potassium persulfate.

In some embodiments, the initiator is azobisisobutyronitrile.

In the disclosure, the raw material of the polymer binder may also include a cross-linking agent. The cross-linking agent may be a conventional and optional cross-linking agent in the art and is generally one or more selected from the group consisting of divinylbenzene, ethylene glycol dimethacrylate, allyl methacrylic acid, ethylene glycol diacrylate, butylene glycol diacrylate, butylene glycol dimethacrylate, neopentyl glycol dimethacrylate, adipate dimethacrylate, triethylene glycol dimethacrylate, tetraethylene glycol dimethacrylate, trimethylolpropane, and pentaerythritol tetramethacrylate.

In some embodiments, the cross-linking agent is divinylbenzene.

In the disclosure, the water phase may further include one or more of a dispersant, a polymerization inhibitor, and a metal salt.

Herein, the dispersant may improve stability of large particle size latex particles. The dispersant may be a conventional dispersant in the art and is generally one or more selected from the group consisting of polyvinyl alcohol, magnesium hydroxide, calcium carbonate, calcium phosphate, silica sol, polyvinylpyrrolidone, styrene-maleic anhydride copolymer, and carboxymethylcellulose, such as polyvinyl alcohol.

Herein, the polymerization inhibitor may be a conventional polymerization inhibitor in the art and is generally selected from nitrite and/or potassium dichromate, such as sodium nitrite.

Herein, the metal salt may reduce diffusion of highly water-soluble monomers in the water phase, capture free radicals in the water phase, and improve synthesis efficiency of the phase change composite binder. The metal salt may be a conventional metal salt in the art and is generally an ionic compound, such as sodium chloride.

In the disclosure, a weight ratio of the phase change material to the monomer may be (10-400):100, preferably (100-400):100, such as 150:100 or 200:100.

In the disclosure, a weight ratio of the emulsifier to water may be (0.01-5): (150-2,000), preferably (0.01-5): (150-1,000), such as 0.01:400, 0.01:500, or 0.01: 1,000.

In some embodiments, the oil phase includes the cross-linking agent, the initiator, the phase change material, and the monomer. Herein, a weight ratio of the cross-linking agent to the initiator to the phase change material to the monomer is (0.5-3):(0.1-3):(10-400):100, optionally (0.5-3):(0.1-3):(100-400):100, such as 2:0.5:150:100, 2:0.5:200:100, or 2:0.5:400:100.

In some embodiments, the water phase includes the dispersant, the emulsifier, the metal salt, the polymerization inhibitor, and water. Herein, a weight ratio of the dispersant to the emulsifier to the metal salt to the polymerization inhibitor to water is (1-50):(0.01-5):(0.5-5):(0.01-2):(150-2000), optionally, (1-50):(0.01-5):(0.5-5):(0.01-2):(150-1000), such as 10:0.01:1:0.01:400, 10:0.01:1:0.01:500, or 10:0.01:1:0.01:1000.

### Electrochemical Device

In the third aspect of the disclosure, an electrochemical device is provided, and the composite binder according to the above is used in a preparation process of an electrode sheet of the electrochemical device. The composite binder is a composite binder provided by the disclosure or a composite binder prepared by the preparation method of the composite binder provided by the disclosure.

In the disclosure, the electrode sheet is preferably a negative electrode sheet.

In the disclosure, the electrochemical device may be a sodium-ion battery or a lithium-ion battery.

In some embodiments, the electrochemical device is a lithium-ion battery. The lithium-ion battery includes a negative electrode sheet, a positive electrode sheet, a separator, and an electrolyte.

### Negative Electrode Sheet

In the disclosure, the negative electrode sheet may include a negative electrode current collector and a negative electrode material layer located on at least one surface of the negative electrode current collector. The negative electrode material layer includes a negative electrode active material and the composite binder, and according to needs, a conductive agent and/or a thickener may be further added.

Herein, the negative electrode active material may be a negative electrode active material commonly used in the art to prepare a negative electrode sheet, such as one or more of natural graphite, artificial graphite, soft carbon, hard carbon, lithium metal, and silicon-based materials.

Herein, the conductive agent is a reagent used to ensure that the electrode exhibits good charging and discharging performance. The conductive agent may be optionally selected from: graphite materials (e.g., natural graphite or artificial graphite), carbon black materials (e.g., carbon black, acetylene black, Ketjen black, channel black, furnace black, lamp black, or thermal black), conductive fibers (e.g., carbon fibers and metal fibers), metal powders (e.g., fluorocarbon powders, aluminum powders, or nickel powders), conductive whiskers (e.g., zinc oxide or potassium titanate), conductive metal oxides (e.g., titanium dioxide), and conductive polymers (e.g., polyphenylene derivatives).

Herein, the addition of the thickener may increase system viscosity of each component in the negative electrode material layer, and the thickener may be a thickener commonly used in the art to prepare a negative electrode sheet, such as sodium carboxymethylcellulose (CMC).

In some embodiments, the negative electrode material is graphite, the conductive agent is carbon black, and the thickener is CMC. A mass ratio of the graphite to the carbon black to the composite binder to the CMC in the negative electrode material layer is optionally 96:1:2:1.

In some embodiments, the negative electrode sheet is prepared using the following method. The negative electrode active material, the conductive agent, the composite binder, the thickener, and a solvent are mixed to obtain a negative electrode slurry. The negative electrode slurry is coated on the negative electrode current collector, and the negative electrode sheet is prepared through drying, cold pressing, and cutting processes.

Herein, the solvent may be conventional in the art, such as deionized water.

### Positive Electrode Sheet

In the disclosure, the positive electrode sheet may include a positive electrode current collector and a positive electrode material layer located on at least one surface of the positive electrode current collector. The positive electrode material layer includes a positive electrode active material, and according to needs, a conductive agent and/or a binder may be further added. Herein, the positive electrode active material may be conventional in the art, including but not limited to one or more of lithium iron phosphate (LiFePO4, LFP), lithium iron manganese phosphate, a ternary positive electrode material, and a lithium-rich manganese-based material. The ternary positive electrode material is, for example, NCM622 (Li(Ni_{0.6}Co_{0.2}Mn_{0.2})O₂) or NCM811 (Li(Ni_{0.8}Co_{0.1}Mn_{0.1})O₂).

Herein, the conductive agent is not particularly limited as long as it has conductivity and does not cause chemical changes in the battery. For instance, graphite (e.g., natural graphite or artificial graphite), carbon-based materials (e.g., carbon black (super P), acetylene black, Ketjen black, channel black, furnace black, lamp black, thermal black, or carbon fibers), metal powders or metal fibers (e.g., copper, nickel, aluminum, or silver), conductive whiskers (e.g., zinc oxide whiskers or potassium titanate whiskers), conductive metal oxides (e.g., titanium dioxide), or conductive polymers (e.g., polyphenylene derivatives) may be used.

Herein, the binder improves bonding between the positive electrode active materials and adhesion between the positive electrode active materials and the positive electrode current collector, and its type is not particularly limited. The binder may be a conventional binder in the art or may be the composite binder as described above. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, and polyvinylpyrrolidone, tetrafluoroethylene, polyethylene, polypropylene, ethylene-propylene-diene monomer (EPDM), sulfonated EPDM, styrene butadiene rubber (SBR), fluorine rubber, or various copolymers thereof, and any one thereof or a mixture of two or more thereof may be used.

In some embodiments, the positive electrode active material is LFP, the conductive agent is Super P, and the binder is PVDF. A mass ratio of the LFP to the Super P to the PVDF in the positive electrode material layer is optionally 97:1:2.

In some embodiments, the positive electrode active material is NCM622, the conductive agent is Super P, and the binder is PVDF. A mass ratio of the NCM622 to the Super P to the PVDF in the positive electrode material layer is optionally 97:1:2.

In some embodiments, the positive electrode sheet is prepared using the following preparation method.

The positive electrode active material, the conductive agent, the binder, and a solvent are mixed to obtain a positive electrode slurry. The positive electrode slurry is coated on the positive electrode current collector, and the positive electrode sheet is prepared through drying, cold pressing, and cutting processes.

Herein, the solvent may be an organic solvent commonly used in the art to prepare the positive electrode sheet slurry, such as one or more selected from the group consisting of N-methylpyrrolidone (NMP), DMAC, and acetone.

In the disclosure, for the positive electrode current collector and the negative electrode current collector, materials that do not cause chemical changes and have high conductivity may be used without restriction according to actual needs. For instance, stainless steel, aluminum, nickel, titanium, or roasted carbon may usually be used, or aluminum or stainless steel materials surface-treated with carbon, nickel, titanium or silver may usually be used. In order to enhance the adhesion of the positive and negative electrode active materials, micro-embossing may be formed on the surfaces of the positive and negative electrode current collectors. Both the positive and negative electrode current collectors may be used in various forms, such as films, sheets, foils, meshes, or porous bodies.

### Electrolyte

In the disclosure, the electrolyte may be an electrolyte commonly used in lithium-ion secondary battery cells in the art, generally including a non-aqueous solvent and a lithium salt.

Herein, the non-aqueous solvent is selected from a carbonate solvent, for example. To be specific, the carbonate solvent is one or more selected from the group consisting of ethylene carbonate (EC), propylene carbonate (PC), polyethylene carbonate (PEC), fluoroethylene carbonate (FEC), dimethyl carbonate (DMC), and diethyl carbonate (DEC), dipropyl carbonate (DPC), methylpropyl carbonate (MPC), ethylpropyl carbonate (EPC), methyl ethyl carbonate (MEC), ethyl methyl carbonate (EMC), ethylene carbonate (EC), propylene carbonate (PC), and butylene carbonate (BC).

In some embodiments, the non-aqueous solvent is ethylene carbonate and propylene carbonate. A volume ratio of the ethylene carbonate to the propylene carbonate is optionally 1:1.

Herein, the lithium salt may be a conventional lithium salt in the art, such as LiPF₆.

In the disclosure, the preparation method of the electrolyte may be conventional in the art, for example, it includes: dissolving the lithium salt in the non-aqueous solvent.

### Separator

In the disclosure, the separator may be conventional in the art, for example, a polypropylene (PP) separator or a polyethylene (PE) separator may be used.

In some embodiments, the lithium-ion battery is manufactured using the following preparation method.

The positive electrode sheet, the separator, and the negative electrode sheet are wound or laminated in sequence and then placed in a battery shell, the electrolyte is injected, and the lithium-ion battery is manufactured through the formation and sealing processes.

On the basis of conforming to common knowledge in the art, the abovementioned optional conditions may be combined arbitrarily to obtain the preferred embodiments of the disclosure.

All the reagents and raw materials used in the disclosure are conventional reagents and raw materials and are commercially available.

### Example 1

(1) 2 parts by mass of divinylbenzene, 0.5 parts by mass of azobisisobutyronitrile, 200 parts by mass of paraffin wax (the phase change temperature is 35°C to 40°C, and since the phase change process is a continuous change process, the phase change temperature herein can only be controlled within a certain range rather than a specific point value, the same as below), and 100 parts by mass of monomers (50 parts by mass of styrene, 40 parts by mass of hydroxyethyl acrylate, and 10 parts by mass of butyl acrylate) were mixed to form an oil phase.
(2) 10 parts by mass of polyvinyl alcohol, 0.01 parts by mass of sodium lauryl sulfate, 1 part by mass of sodium chloride, and 0.01 parts by mass of sodium nitrite were dispersed or dissolved in 1,000 parts by mass of deionized water to form a water phase.
(3) The oil phase and the water phase were mixed, and a resulting mixture was sheared in a cell grinder (400W) for 5 minutes to 15 minutes to obtain an oil/water dispersion system that resembled small oil droplets (including paraffin wax and polymer monomers) dispersed in water.
(4) A temperature of the above oil/water dispersion system was raised to 75°C, and after polymerization for 10 hours (during which time, the polymer monomers polymerized around the paraffin material to form a polymer binder that wrapped the paraffin material, and during the polymerization process, a nitrogen gas could be continuously introduced and stirred appropriately to prevent excessive agglomeration between the synthesized binders), the reaction was stopped to obtain a composite binder emulsion (note: a boiling point of reactants was much higher than the polymerization temperature, and there was almost no loss of raw materials).

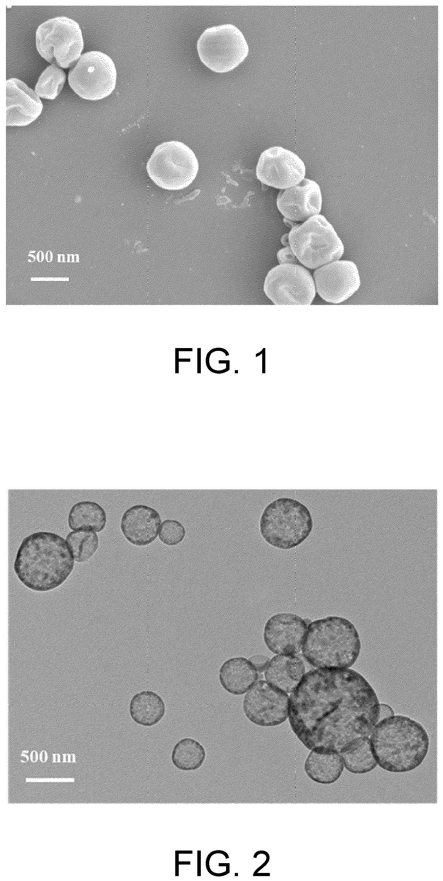

0.01mL of composite binder emulsion was used, diluted 5 to 10 times, and dried. The SEM electron microscope and TEM electron microscope scanning results of the obtained composite binder are shown in FIG. 1 and FIG. 2 respectively. The particle size of the composite binder obtained was 0.4 µm, the core-shell mass ratio was 2:1, and the shell thickness was 30 nm.

Herein, the particle size and shell layer thickness are the average values obtained by selecting at least 50 composite binder particles and taking SEM electron microscopy or TEM electron microscopy scanning.

### Example 2

On the basis of Example 1, only the amount of paraffin wax in step (1) was changed to 150 parts by mass, and other conditions were kept unchanged.

The particle size of the composite binder obtained was 0.4 µm, the core-shell mass ratio was 1.5:1, and the shell thickness was 40 nm.

### Example 3

(1) On the basis of Example 1, only the paraffin wax in step (1) was changed to a paraffin wax with a phase change temperature of 5°C to 10°C, and other conditions were kept unchanged to produce a composite binder. The particle size of the composite binder obtained was 0.4 µm, the core-shell mass ratio was 2:1, and the shell thickness was 30 nm.
(2) The composite binders in step (1) and Example 1 were blended in a mass ratio of 1:1 and then used as a binder.

### Example 4

(1) On the basis of Example 1, only the paraffin wax in step (1) was changed to a paraffin wax with a phase change temperature of 5°C to 10°C, the amount of paraffin wax was 150 parts by mass, and other conditions were kept unchanged to produce a composite binder. The particle size of the composite binder obtained was 0.4 µm, the core-shell mass ratio was 1.5:1, and the shell thickness was 40 nm.
(2) The composite binders in step (1) and Example 2 were blended in a mass ratio of 1:1 and then used as a binder.

### Example 5

On the basis of Example 1, only the paraffin wax in step (1) was changed to a paraffin wax with a phase change temperature of 45°C to 50°C, and other conditions were kept unchanged.

The particle size of the composite binder obtained was 0.4 µm, the core-shell mass ratio was 2:1, and the shell thickness was 30 nm.

### Example 6

On the basis of Example 2, only the paraffin wax in step (1) was changed to a paraffin wax with a phase change temperature of 45°C to 50°C, and other conditions were kept unchanged.

The particle size of the composite binder obtained was 0.4 µm, the core-shell mass ratio was 1.5:1, and the shell thickness was 40 nm.

### Example 7

On the basis of Example 1, only the paraffin wax in step (1) was changed to a paraffin wax with a phase change temperature of 20°C to 25°C, and other conditions were kept unchanged.

The particle size of the composite binder obtained was 0.4 µm, the core-shell mass ratio was 2:1, and the shell thickness was 30 nm.

### Example 8

On the basis of Example 1, only the paraffin wax in step (1) was changed to a paraffin wax with a phase change temperature of 25°C to 30°C, and other conditions were kept unchanged.

The particle size of the composite binder obtained was 0.4 µm, the core-shell mass ratio was 2:1, and the shell thickness was 30 nm.

### Comparative Example 1

The conventional binder styrene-butadiene rubber (ZEON-451B) was used as the binder, and no phase change material was added.

### Comparative Example 2

On the basis of Example 1, no emulsifier sodium lauryl sulfate was added in step (2), and other conditions were kept unchanged.

A composite binder could not be produced.

### Effect Example 1

### 1. Preparation of Lithium-ion Battery

### (1) Preparation of Positive Electrode Sheet:

The positive electrode active material (LFP or NCM622), conductive carbon black Super P, and binder PVDF were thoroughly stirred and mixed in an appropriate amount of solvent NMP at a weight ratio of 97:1:2 to form a uniform positive electrode stable slurry with a viscosity of 4,000 mPa·s to 8,000 mPa s. The slurry was allowed to stand for 48 hours without abnormal phenomena such as gelling, delamination, and sedimentation. The positive electrode slurry was evenly coated on an Al foil current collector and dried and cold pressed to a designed compaction density. After die cutting/slitting, positive electrode sheets were obtained.

### (2) Preparation of Negative Electrode Sheet:

The negative electrode active material (graphite), conductive agent (carbon black), binder (i.e., the composite binder in Examples 1 to 14/the conventional binder in Comparative Example 1), and thickener (CMC) were thoroughly stirred and mixed in an appropriate amount of water solvent at a weight ratio of 96:1:2:1 to form a uniform negative electrode stable slurry. The negative electrode slurry was evenly coated on a Cu foil current collector and dried and cold pressed to a designed compaction density. After die cutting/slitting, different negative electrode sheets were obtained.

### (3) Preparation of Electrolyte:

Equal volumes of ethylene carbonate and propylene carbonate were blended, and then an appropriate amount of lithium hexafluorophosphate was uniformly dissolved in the mixed solvent to obtain a 1 mol/L electrolyte.

### (4) Preparation of Separator:

A PP material separator was selected.

### (5) Preparation of Lithium-ion Battery:

A conventional lithium-ion battery manufacturing process was adopted. The positive electrode sheets, the separator, and different negative electrode sheets were rolled or laminated into bare cells, which were placed in the battery shell. The electrolyte was then injected, followed by formation and sealing processes, to obtain lithium-ion batteries containing different composite binders.

### 2. Capacity Retention Test

### (1) Cyclic Discharging Capacity Retention Test at 45°C:

The lithium-ion batteries containing the binders obtained in the examples and the comparative examples were subjected to repeated charging and discharging cycles. The first cycle specifically includes: (a) a produced lithium-ion battery was allowed to stand at 45°C for 30 minutes, (b) was discharged at a constant current of 1C to a battery discharging termination voltage and then was allowed to stand for 30 minutes, (c) was charged with a constant current of 1C to a battery charging termination voltage, was charged with a constant voltage until the current was less than 0.05C, and was allowed to stand for 5 minutes, and (d) was discharged at a constant current of 1C to the battery discharging termination voltage and was allowed to stand for 5 minutes. The measured discharging capacity was calculated as Cap1.

The above steps (a), (c), and (d) were repeated to perform repeated charging and discharging cycles. The discharging capacity measured at the 800^{th} time was calculated as Cap800. The capacity retention ratio of 800 cycles was: (Cap800/Cap1)*100%.

Herein, the charging termination voltage of the battery using LFP as the positive electrode material was 3.65V, and the discharging termination voltage was 2.5V. The charging termination voltage of the battery using NCM622 as the positive electrode material was 4.25V, and the discharging termination voltage was 2.8V, same as follows.

### (2) Cyclic Discharging Capacity Retention Test at 25°C:

The lithium-ion batteries containing the binders obtained in the examples and the comparative examples were subjected to repeated charging and discharging cycles. The first cycle specifically includes: (a) a produced lithium-ion battery was allowed stand at 25°C for 30 minutes, (b) was discharged at a constant current of 1C to the battery discharging termination voltage and then was allowed to stand for 30 minutes, (c) was charged with a constant current of 1C to the battery charging termination voltage, was charged with a constant voltage until the current was less than 0.05C, and was allowed to stand for 5 minutes, and (d) was discharged at a constant current of 1C to the battery discharging termination voltage and was allowed to stand for 5 minutes. The measured discharging capacity was calculated as Cap1.

The above steps (a), (c), and (d) were repeated to perform repeated charging and discharging cycles. The discharging capacity measured at the 800^{th} time was calculated as Cap800. The capacity retention ratio of 800 cycles was: Cap800/Cap1*100%.

The obtained results are shown in Table 1.

**Table 1: Performance of lithium-ion batteries containing binders in Examples and Comparative Examples**

| **No.** | **Phase change material** | | **Battery type** | **Cyclic Discharging Capacity Retention Ratio at 45°C @1C/1C_800 cycles (%)** | **Cyclic Discharging Capacity Retention Ratio at 25°C @1C/1C_800 cycles (%)** |
|---|---|---|---|---|---|
| | **Type** | **Phase change temperature** | | | |
| **Example 1** | paraffin wax | 35°C to 40°C | LFP battery | 85 | 96 |
| | | | NCM battery | 79 | 89 |
| **Example 2** | paraffin wax | 35°C to 40°C | LFP battery | 85 | 95 |
| **Example 3** | paraffin wax | 5°C to 10°C and 35°C to 40°C, 1:1 | LFP battery | 85 | 93 |
| | | | NCM battery | 80 | 91 |
| **Example 4** | paraffin wax | 5°C to 10°C and 35°C to 40°C, 1:1 | LFP battery | 85 | 93 |
| | | | NCM battery | 80 | 90 |
| **Example 5** | paraffin wax | 45°C to 50°C | LFP battery | 91 | 93 |
| | | | NCM battery | 82 | 85 |
| **Example 6** | paraffin wax | 45°C to 50°C | LFP battery | 90 | 93 |
| **Example 7** | paraffin wax | 20°C to 25°C | LFP battery | 85 | 91 |
| **Example 8** | paraffin wax | 25°C to 30°C | LFP battery | 85 | 96 |
| | | | NCM battery | 79 | 89 |
| **Comparative Example 1** | (only styrene-butadiene rubber is used as adhesive) | | LFP battery | 84 | 91 |
| | | | NCM battery | 79 | 84 |

Herein, LFP batteries are batteries made with LFP as the positive electrode active material, and NCM batteries are batteries made with NCM as the positive electrode active material.

According to Table 1, it can be known that after the composite binder obtained in the embodiments of the disclosure is further made into an LFP battery, the cyclic discharging capacity retention ratio at 25°C is ensured to be over 91%, and the cyclic discharging capacity retention ratio at 45°C is ensured to be over 85%. Moreover, after being further made into an NCM battery, the cyclic discharging capacity retention ratio at 25°C is ensured to be over 85%, and the cyclic discharging capacity retention ratio at 45°C is ensured to be over 79%.

Herein, for an LFP battery, since the battery itself has good high-temperature resistance, when the phase change temperature of the phase change material is fixed, the addition amount of the phase change material may not generate a significant impact. For the phase change temperature of the phase change material, when containing a phase change material with a phase change temperature of 20°C to 25°C, the resulting LFP battery may maintain a cyclic discharging capacity retention ratio comparable to that of an existing conventional binder (Comparative Example 1). As the phase change temperature increases to 40°C, the cyclic discharging capacity retention ratio at 45°C always remains at a comparable level, but the cyclic discharging capacity retention ratio at 25°C increases to equilibrium. When a higher phase change temperature (45°C to 50°C) is further selected, the cyclic discharging capacity retention ratio at 45°C significantly increases. However, due to the large temperature difference between the detection temperature and the phase change temperature, the cyclic discharging capacity retention ratio at 25°C drops slightly, but it is still better than a conventional binder (Comparative Example 1).

Herein, for an NCM battery, due to the relatively poor high-temperature resistance of the battery itself, when the phase change temperature of the phase change material is fixed, the impact of the addition of the phase change material is more obvious than that of the LFP battery. As the phase change temperature increases from 25°C to 40°C, its cyclic discharging capacity retention ratio at 45°C always remains at a level comparable to that of a conventional binder (Comparative Example 1). However, the cyclic discharging capacity retention ratio at 25°C subsequently increases to equilibrium and is better than that of a conventional binder (Comparative Example 1). When a higher phase change temperature (45°C to 50°C) is further selected, the cyclic discharging capacity retention ratio at 45°C significantly increases. However, due to the large temperature difference between the detection temperature and the phase change temperature, the cyclic discharging capacity retention ratio at 25°C drops slightly, but still maintains a level comparable to that of a conventional binder (Comparative Example 1).

In view of the foregoing, in the battery prepared by the composite binder provided by the disclosure, based on the characteristics of the internal phase change material, the internal temperature of the battery may be controlled in different temperature environments, that is, the temperature can be controlled directly and efficiently from the electrode sheet level. In this way, thermal shock is alleviated and battery performance such as fast charging, high and low temperatures, circulation, and safety are improved.

## Claims

1. A composite binder having a core-shell structure, wherein
a core of the core-shell structure comprises a phase change material, wherein a phase change temperature of the phase change material is -10°C to 70°C, and
a shell of the core-shell structure comprises a polymer binder.

2. The composite binder according to claim 1, wherein the composite binder satisfies one or more of the following conditions (a) to (e):
(a) a particle size of the composite binder is 0.1 µm to 10 µm,
(b) in the core-shell structure, a mass ratio of the core to the shell is (1:10) to (4:1),
(c) a thickness of the shell of the core-shell structure is 0.01 µm to 1 µm,
(d) the phase change temperature of the phase change material is 25°C to 50°C, and
(e) the phase change material is selected from C₁₀-C₂₄ long-chain alkanes and any mixture thereof.

3. The composite binder according to claim 1, wherein the phase change temperature of the phase change material is 25°C to 30°C, 35°C to 40°C, or 45°C to 50°C.

4. A preparation method of the composite binder according to any one of claims 1 to 3, comprising:
subjecting a mixture of an oil phase and a water phase to a shearing treatment and a polymerization reaction to produce the composite binder,
wherein the oil phase comprises the phase change material and a raw material of the polymer binder, and the raw material of the polymer binder at least comprises a monomer,
the water phase comprises water and an emulsifier.

5. The preparation method of the composite binder according to claim 4, wherein the preparation method of the composite binder satisfies one or more of the following conditions (a) to (f):
(a) a mass of the oil phase is based on a total mass of the phase change material and the monomer, a mass of the water phase is based on a total mass of water, and a mass ratio of the oil phase to the water phase is 1: (1-10),
(b) a time of the shearing treatment is 5 minutes to 15minutes,
(c) a temperature of the shearing treatment is an ambient temperature,
(d) a temperature of the polymerization reaction is 50°C to 85°C,
(e) a time of the polymerization reaction is 6 hours to 12 hours, and
(e) an inert gas is continuously introduced into a process of the polymerization reaction.

6. The preparation method of the composite binder according to claim 4, wherein the preparation method of the composite binder satisfies one or more of the following conditions (a) to (c):
(a) the monomer is one or more selected from the group consisting of butyl acrylate, hydroxyethyl acrylate, methacrylate, acrylic acid, methacrylic acid, acrylonitrile, methacrylonitrile, styrene, vinyl toluene, tert-butylstyrene, and N-hydroxymethylacrylamide,
(b) the raw material of the polymer binder further comprises an initiator, and
(c) the raw material of the polymer binder further comprises a cross-linking agent.

7. The preparation method of the composite binder according to claim 6, wherein the preparation method of the composite binder satisfies one or more of the following conditions (a) to (b):
(a) the initiator is selected from an azo initiator and a peroxide initiator, and
(b) the cross-linking agent is one or more selected from the group consisting of divinylbenzene, ethylene glycol dimethacrylate, allyl methacrylic acid, ethylene glycol diacrylate, butylene glycol diacrylate, butylene glycol dimethacrylate, neopentyl glycol dimethacrylate, adipate dimethacrylate, triethylene glycol dimethacrylate, tetraethylene glycol dimethacrylate, trimethylolpropane, and pentaerythritol tetramethacrylate.

8. The preparation method of the composite binder according to claim 4, wherein the preparation method of the composite binder satisfies one or more of the following conditions (a) to (b):
(a) the emulsifier is one or more selected from the group consisting of sodium lauryl sulfate, cetyltrimethylammonium bromide, nonylphenol polyoxyethylene ether, an OP surfactant, a Span surfactant, a Tween surfactant, and sodium dodecyl benzene sulfonate, and
(b) the water phase further comprises one or more of a dispersant, a polymerization inhibitor, and a metal salt, wherein the dispersant is one or more selected from the group consisting of polyvinyl alcohol, magnesium hydroxide, calcium carbonate, calcium phosphate, silica sol, polyvinylpyrrolidone, styrene-maleic anhydride copolymer, and carboxymethylcellulose, the polymerization inhibitor is selected from nitrite and/or potassium dichromate, and the metal salt is an ionic compound.

9. The preparation method of the composite binder according to claim 8, wherein the preparation method of the composite binder satisfies one or more of the following conditions (a) to (d):
(a) a weight ratio of the phase change material to the monomer is (10-400): 100,
(b) a weight ratio of the emulsifier to water is (0.01-5): (150-2000),
(c) the oil phase comprises a cross-linking agent, an initiator, the phase change material, and the monomer, wherein a weight ratio of the cross-linking agent to the initiator to the phase change material to the monomer is (0.5-3): (0.1-3): (10-400): 100,
(d) the water phase comprises the dispersant, the emulsifier, the metal salt, the polymerization inhibitor, and water, wherein a weight ratio of the dispersant to the emulsifier to the metal salt to the polymerization inhibitor to water is (1-50):(0.01-5):(0.5-5):(0.01-2):(150-2000).

10. An electrochemical device, wherein the composite binder according to any one of claims 1 to 3 is used in a preparation process of an electrode sheet of the electrochemical device.
